Europäisches Patentamt

(19) European Patent Office

Office européen des brevets

(11) Publication number: **0 112 086**
**B1**

(12) **EUROPEAN PATENT SPECIFICATION**

(45) Date of publication of patent specification: 08.02.89

(51) Int. Cl.⁴: **A 47 J 31/30,** A 47 J 31/04, B 65 D 81/34

(21) Application number: 83307253.1

(22) Date of filing: 29.11.83

(54) Drink maker.

(30) Priority: 03.12.82 IT 170882
08.03.83 IT 936183

(43) Date of publication of application:
27.06.84 Bulletin 84/26

(45) Publication of the grant of the patent:
08.02.89 Bulletin 89/06

(84) Designated Contracting States:
DE FR GB

(56) References cited:
FR-A-1 060 328
FR-A-2 031 251
US-A-4 167 899

(73) Proprietor: Berardi, Francesco
Via Montegrappa 42
I-14049 Nizza Monferrato Asti (IT)
(73) Proprietor: Francone, Enrico
Via Bricco Visconti Nord, 32
I-14017 Valfenera d'Asti (IT)
(73) Proprietor: Lizzi, Leonardo Paolo
Via M. d'Azeglio 1
I-14100 Asti (IT)

(72) Inventor: Berardi, Francesco
Via Montegrappa 42
I-14049 Nizza Monferrato Asti (IT)
Inventor: Francone, Enrico
Via Bricco Visconti Nord, 32
I-14017 Valfenera d'Asti (IT)
Inventor: Lizzi, Leonardo Paolo
Via M. d'Azeglio 1
I-14100 Asti (IT)

(74) Representative: Corin, Christopher John et al
Mathisen Macara & Co. The Coach House 6-8
Swakeleys Road
Ickenham Uxbridge UB10 8BZ (GB)

Courier Press, Leamington Spa, England.

# Description

The present invention relates to throw-away assemblies which allow drinks to be made instantly from a liquid to be heated and a drink making product such as, for example, filter coffee, instant coffee powder, leaf tea, soup powder, or similar product. Such drinks are made by heating the liquid and by combining with the product for example by passage of the liquid through a charge of the product.

US-A-4 167 899 discloses a coffee maker comprising a top pot portion and a bottom pot portion with a pump housing formed by two pump housing sections interposed therebetween. Said two sections form a coffee charge receiving chamber. The coffee charge is sealed within a holder wrapper having a constant vertical thickness and a circumferential flange adapted to be received between opposite flanges of said two housing sections. In this known coffee maker the water under pressure flows through a very limited thickness of the coffee charge, corresponding to the vertical thickness of the coffee charge itself. Furthermore, only the central portion of said charge is properly exploited, being the filtering surface developed over the whole surface of the charge transversal section. In fact, hot water coming from the bottom pot portion in a central position relative to said charge. tends to cross it in the central zone forming passages in the coffee powder. The circumferential portion of the charge remains therefore almost unexploited, with an incomplete utilisation of the whole charge. This results in an increase of the overall cost of the coffee maker, this increase being particularly disadvantageous in a throw away assembly. Thus, in order to obtain a sufficiently strong drink, a large amount of powder must be used, most of which will not be properly exploited.

The present invention relates to an improved assembly for making a drink from heated liquid, which allows a complete exploitation of the drink making product.

The present invention provides an assembly for making a drink from a heated liquid and a drink making product, comprising a lower container adapted to contain the liquid to be heated, an upper container coupled to the lower container and adapted to receive the made drink, an intermediate element engaged between said containers and defining a receptacle for the drink making product, and a membrane normally preventing liquid access to the drink making product, which membrane is adapted to be torn when the drink is to be made, is characterised in that it further comprises a disc-shaped element forming an upper filter, which is engaged between said two containers and together with said intermediate element encloses the drink making product, said disc-shaped element having a downward conical projection shaped to deflect liquid towards perforations in said disc-shaped element surrounding said projection, and said intermediate element defining filter passages by means of which liquid can flow under pressure through the product.

In a preferred embodiment the two containers are coupled together by peripheral coupling lips formed at the top of the lower container and at the bottom of the upper container. Between the two said lips there is placed the edge of the intermediate element.

While the bottom container is advantageously made of thin metallic material, the upper container and the intermediate elements may be made also of pressed food-grade synthetic material.

Other preferred features of the invention are defined in the dependent claims.

Two embodiments of the invention will now be described, by way of example only, with reference to the accompanying diagrammatic drawings in which:

Figure 1 shows a cross-section of an assembly according to the invention;

Figure 2 is similar to Figure 1, but shows in section the components in exploded form;

Figure 3 shows a view substantially along line III-III of Figure 1; and Figure 4 shows an alternative embodiment.

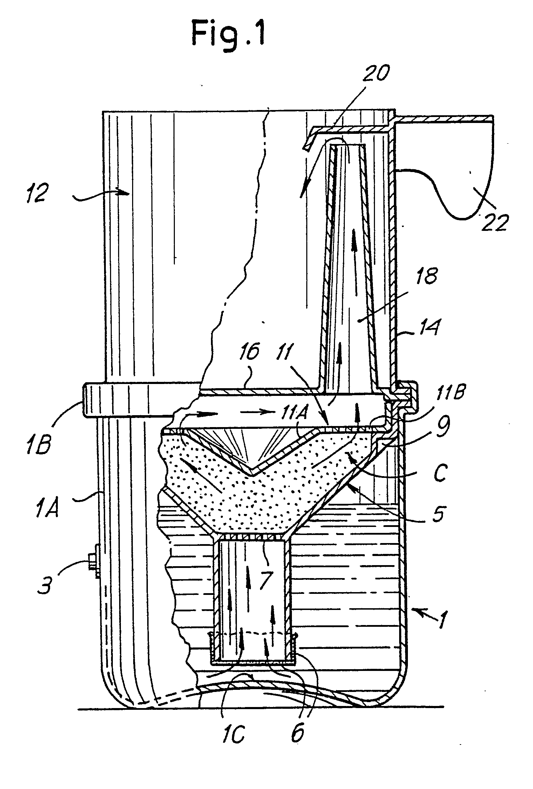

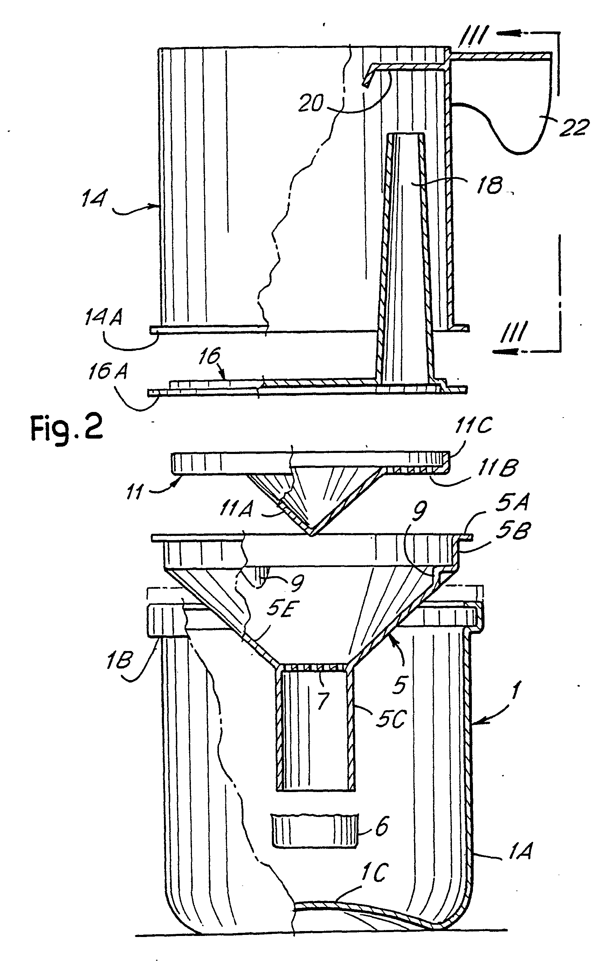

As illustrated in Figures 1 to 3, 1 denotes a first lower container acting as a boiler, which may be made of thin metal foil suitably cut and pressed to form a side wall 1A of circular cross-section and mainly cylindrical, a stepped upper peripheral coupling lip 1B, and a bottom 1C, advantageously externally concave or convex to provide resistance to pressure and also to facilitate the heating of the liquid contents. There may be optionally combined with the container 1 a pressure relief valve 3 set at a maximum tolerable pressure for safety reasons.

A first intermediate element 5 is in the form of a funnel adapted to be housed inside the upper part of the container 1. A peripheral lip 5A of the element 5 is placed alongside the lip 1B in the assembly operation, while a side edge 5B lies adjacent the upper part of the side wall 1A of the container 1. The element includes a wall 5E in the shape of a truncated cone, connected to a cylindrical mouth 5C which extends to a position relatively close to the bottom IC of the container 1. A lower open end of the mouth 5C is closed with a membrane or liquid-tight film 6, which is made to adhere to the outside of the mouth 5C to close it until pressure exerted on the actual membrane 6 tears it.

Inside the element 5 there is a perforated disc-shaped diaphragm 7 designed to act as a filter, to hold the coffee powder or other drink making product. This disc 7 is arranged between the funnel wall 5E and the mouth 5C.

In the funnel-shaped part 5E of the element 5, along the edge 5B slight projections 9 are provided. On these projections 9 there may be placed an upper filter 11, designed with a central deflection-cone projection 11A, a perforated annular area 11B and an upstanding peripheral edge 11C.

Between the disc 7, the wall 5E and the upper filter 11 there is formed a chamber adapted to contain a charge C of coffee powder or other drink making product. The projection 11A reduces the volume available for the charge and by deflecting the liquid ensures the efficient utilization of all the charge.

With the insertion of the element 5 with the membrane 6 into the container 1, below said element 5 and inside said container 1 there is formed a cavity into which there has been introduced beforehand a quantity of liquid (water or other) slightly exceeding the necessary amount for making the drink.

Above the container 1, completed by the elements 5 and 11, there is disposed and coupled to it, a second container 12 to collect the made drink, and to serve as a cup. This second container is made according to the example illustrated from a component 14 which forms a side wall and has a flange or lower peripheral lip 14A, and from a disc-shaped bottom 16 which is applied by means of a stepped peripheral edge 16A against the flange or lip 14A. The upper container 12 made from components 14 and 16 is substantially developed in the form of a cup. This container is coupled to the bottom container 1 designed as a boiler, making use of the flanged lip 1B, the lip 14A, and the peripheral area 16A of the disc-shaped bottom 16, which may be sealed between them in suitable manner, advantageously, together within the flange of the stepped lip 1B which surrounds and holds the edges 5A, 16A and 14A, and which holds the upper filter 11. This coupling is obviously completed after the introduction of the liquid into the container 1, the insertion of the element 5 on the container 1, the introduction of the charge C of coffee powder or other and the placing of the upper filter 11, the bottom 16 and the element 14.

The disc-shaped element 16 has, in an eccentic position, a passage 18 extending upwardly and intended for the throughflow of the drink which ascends through it to be discharged into the upper container 12 formed by the components 14,16. The passage 18 is in communication with a space delimited between the components 11 and 16, into which space the drink being formed arrives, having flowed through the charge C. Above the passage 18 there is advantageously provided a bracket-shaped spray shield 20 protruding internally from the wall 14. An external side projection 22 acts as a handle for the unit.

The component 1 is of metal foil, while the components 5, 11, 16, 14 may be made of food-grade injection moulded synthetic resin, capable of withstanding the temperatures of the drink, while some of these may be of liquid-tight paper material.

The whole constitutes a small coffee maker of very low cost, of very restricted overall size and weight, and of practically unlimited shelf life, for example in a waterproof protective wrapper. When required for use the assembly is taken from the protective wrapper, the liquid being still in the container 1 kept isolated from the coffee powder charge contained between the disc 7, the wall 5E and the upper filter 11, by virtue of the presence of the membrane 6. Heat is applied by make-shift or standard means to the bottom 1C of the container 1 causing a rapid rise of temperature of the liquid with initial vaporisation of the liquid. The pressure in the container 1 thus rises, until the pressure brings about the tearing of the membrane 6. The pressure of the liquid thereafter causes it to rise through the disc 7, the charge C, the upper filter 11 and the passage 18 until it discharges and collects in the upper container 12. On passing through the charge C the liquid is converted into the desired drink. It is thus possible to consume from the cup-shaped container 12 the drink made instantly by traditional means. The assembly is not reusable and is thus thrown away after use.

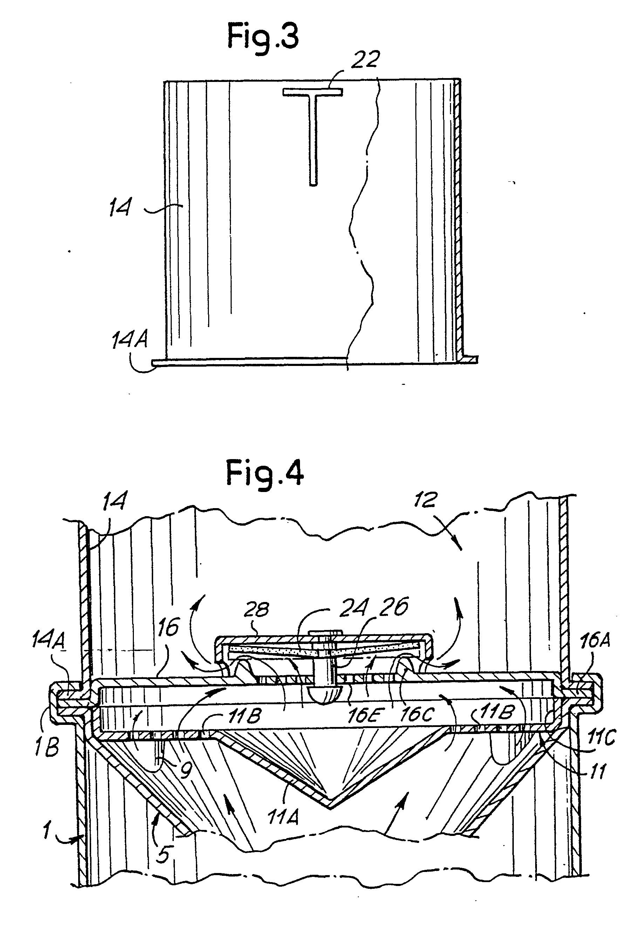

In the alternative assembly of Figure 4, instead of the passage 18 extending upwards, provision is made for a one way valve in the bottom 16. For this purpose an edge 16C is formed around a perforated area 16E onto which there is engaged by means of a stem 26 a resilient blade 24 which constitutes the valve. The drink made through the charge C is pushed by the pressurized steam into the upper container shaped as a cup through the valve 16C, 24 which then retains the drink in the container. A guard 28 for the blade 24 may be fitted with the aim of preventing the valve 16C,24 from being re-opened on stirring the infusion to dissolve a sweetener; raising the blade 24 would cause the drink to flow back into the boiler as a result of the depression caused in the latter.

As a further variation it is possible to provide an internal projecting member on the bottom 1C, close to the membrane 6, which can be operated by an external application of force to tear the membrane. The external force brings about a limited deformation of the bottom 1C causing the projection to pierce the membrane.

**Claims**

1. An assembly for making a drink from a heated liquid and a drink making product, comprising a lower container (1) adapted to contain the liquid to be heated, an upper container (12) coupled to the lower container and adapted to receive the made drink, an intermediate element (5) engaged between said containers and defining a receptacle for the drink making product (C), and a membrane (6) normally preventing liquid access to the drink making product (C), which membrane is adapted to be torn when the drink is to be made, characterised in that a disc-shaped element (11) forming an upper filter is engaged between said two containers (1, 12) and together with said intermediate element (5) encloses the drink making product (C), and comprises a downward conical projection (11A) shaped to deflect liquid towards perforations (11B) in said disc-shaped element (11) surrounding said projection (11A), and said intermediate element (5) defining central filter passages (7) by means of which

EP 0 112 086 B1

liquid can flow under pressure through the product (C).

2. An assembly as claimed in claim 1, characterised in that said membrane (6) is adapted to be torn when the liquid is heated as a result of the liquid pressure.

3. An assembly as claimed in claim 1 or 2, characterised in that said lower container (1) has a peripheral lip (1B) formed at the top thereof and the upper container (12) has a peripheral lip (14A,16A) formed at the bottom thereof, and said intermediate element (5) has a peripheral edge (5A) which is received between the inter-engaged peripheral lips (1B,14A,16A) of said containers (1,12).

4. An assembly as claimed in any one of the preceding claims, characterised in that the upper container (12) includes a side wall component (14) and a base component (16) constituting the bottom which are engaged together.

5. An assembly as claimed in any one of the preceding claims, characterised in that the bottom (16) of the upper container (12) defines an upwardly extending passage (18) inside said upper container (12), said made drink passing upwardly by pressure through said passage (18), and overflowing therefrom to collect in said upper container (12).

6. An assembly as claimed in any one of claims 1 to 4, characterised in that the bottom (16) of the upper container (12) includes a one-way valve (24,26,28) for the made drink to flow through into the upper container (12).

7. An assembly as claimed in any one of the preceding claims, characterised in that the lower container (1) is made of thin metal.

8. An assembly as claimed in any one of the preceding claims, characterised in that the upper container (12) serves as a cup.

9. An assembly as claimed in any one of the preceding claims, characterised in that the upper container (12) and/or intermediate element (5) are made of pressed food grade synthetic resin.

10. An assembly as claimed in claim 1, characterised in that it further comprises an internal projection in the bottom container (1) which can be externally operated to tear said membrane (6).

**Patentansprüche**

1. Einrichtung zur Vorbereitung eines Getränks aus einer aufgewärmten Flüssigkeit und einem Getränkevorbereitungsprodukt, mit einem unteren Behälter (1) für die aufzuwärmende Flüssigkeit, einem oberen, mit dem unteren Behälter verbundenen, Behälter (12) zur Aufnahme des vorbereiteten Getränks, einem zwischen diesen Behältern, einen Aufnahmeraum für das Getränkevorbereitungsprodukt (C) bildenden Zwischenelement (5), und einer Membrane (6), die im normalen Zustand den Zugang der Flüssigkeit zu dem Getränkevorbereitungsprodukt (C) verhindert, und die zerrissen werden kann, wenn das Getränk vorbereitet werden soll, dadurch gekennzeichnet, daß ein einen oberen Filter bildendes, scheibenförmiges Element (11) zwischen den beiden Behältern (1, 12) angeordnet ist und mit dem Zwischenelement (5) das Getränkevorbereitungsprodukt (C) aufnimmt und einen unteren kegelförmigen Ansatz (11A) umfaßt, der eine Gestaltung zur Ableitung der Flüssigkeit in Richtung um dem Ansatz (11A) verteilter Öffnungen (11B) des scheibenförmigen Elementes (11) aufweist, wobei das Zwischenelement (5) zentrale Filterdurchgänge (7) bildet, durch welche die Flüssigkeit unter Druck durch das Produkt (C) durchfliessen kann.

2. Einrichtung nach Anspruch 1, dadurch gekennzeichnet, daß die Membrane (6) dazu geeignet ist, mittels des Flüssigkeitsdrucks während der Flüssigkeitsaufwärmung zerrissen zu werden.

3. Einrichtung nach Anspruch 1 oder 2, dadurch gekennzeichnet, daß der untere Behälter (1) eine am oberen Teil desselben geformte Umfangslippe (lB), und der obere Behälter (12) eine am unteren Teil desselben geformte Umfangslippe (14A, 16A) aufweisen, und das Zwischenelement (5) eine Umfamgskante (5A) umfaßt, die zwischen den miteinander verbundenen Umfangslippen (1B, 14A, 16A) der Behälter (1, 12) aufgenommen ist.

4. Einrichtung nach einer der vorhergehenden Ansprüche, dadurch gekennzeichnet, daß der obere Behälter (12) ein seitliches Wandelement (14) und ein den Boden des Behälters bildendes Grundelement (16) umfaßt, wobei die beiden Wand und Grundelemente miteinander verbunden sind.

5. Einrichtung nach einer der vorhergehenden Ansprüche, dadurch gekennzeichnet, daß der Boden (16) des oberen Behälters (12) einen innerhalb des Behälters (12) nach oben sich erstreckenden, Durchgang (18) bildet, wobei das vorbereitete Getränk unter Druck durch den Durchgang (18) nach oben durchfließt, aus diesem überläuft und sich in dem oberen Behälter (12) sammelt.

6. Einrichtung nach einer der Ansprüche 1 bis 4, dadurch gekennzeichnet, daß der Boden (16) des oberen Behälters (12) ein Rückschlagventil (24, 26, 28) zum Durchfließen des vorbereiteten Getränks in den oberen Behälter (12) umfaßt.

7. Einrichtung nach einer der vorhengehenden Ansprüche, dadurch gekennzeichnet, daß der untere Behälter (1) aus dünnem Metall hergestellt ist.

8. Einrichtung nach einer der vorhergehenden Ansprüche, dadurch gekennzeichnet, daß der obere Behälter (12) als Tasse dient.

9. Einrichtung nach einer der vorhergehenden Ansprüche, dadurch gekennzeichnet, daß der obere Behälter (12) und/oder das Zwischenelement (5) aus gepreßtem Nahrungsmittelkunstharz hergestellt ist.

10. Einrichtung nach Anspruch 1, dadurch gekennzeichnet, daß sie ferner eine zum Zerreißen der Membrane (6) von aussen betätigbare, innere Auskragung in dem unteren Behälter (1) umfaßt.

**Revendications**

1. Dispositif pour préparer une boisson à partir d'un liquide chauffé et d'un produit pour faire une boisson, comprenant un conteneur inférieur (1) conçu pour contenir le liquide devant être chauffé, un conteneur supérieur (12) accouplé au conteneur inférieur et conçu pour recevoir la boisson obtenue, un élément intermédiaire (5) installé entre les deux conteneurs et conformé pour constituer un réceptacle pour le produit pour faire une boisson (C), et une membrane (6) empêchant normalement le liquide d'entrer en contact avec le produit pour faire une boisson (C), cette membrane étant conçue pour se déchirer lorsque la boisson doit être obtenue, ce dispositif étant caractérisé par le fait qu'il comprend un élément en forme de disque (11), formant un filtre supérieur qui est disposé entre les deux conteneurs (1, 12), et qui, en combinaison avec ledit élément intermédiaire (5) renferme le produit pour faire une boisson (C), cet élément en forme de disque comprenant également un prolongement conique orienté vers le bas (11A) et conformé pour dévier le liquide vers les perforations (11B) ménagées dans ledit élément en forme de disque (11) autour dudit prolongement (11A), ledit élément intermédiaire (5) étant encore pourvu de passages filtrants centraux (7) par l'intermédiaire desquels le liquide peut s'écouler sous pression à travers le produit (C).

2. Dispositif selon la revendication 1, caractérisé en ce que la membrane (6) est conçue pour se déchirer sous l'action de la pression du liquide lorsque celui-ci est chauffé.

3. Dispositif selon l'une des revendications 1 ou 2, caractérisé en ce que le conteneur inférieur (1) comporte un rebord périphérique (1B) sur sa partie supérieure et que le conteneur supérieur (12) comporte un rebord périphérique (14A, 16A) sur sa partie inférieure, et en ce que l'élément intermédiaire (5) comporte un bord périphérique (5A) qui est disposé entre les rebords périphériques inter-engagés (1B, 14A, 16A) desdits conteneurs (1, 12).

4. Dispositif suivant l'une quelconque des revendications précédentes, caractérisé en ce que le conteneur supérieur (12) comprend un élément de paroi latérale (14) et un élément de base (16) constituant le fond dudit conteneur, ces éléments étant reliés entre eux.

5. Dispositif selon l'une quelconque des revendications précédentes, caractérisé en ce que le fond (16) du conteneur supérieur (12) comprend un passage s'étendant vers le haut (18), à l'intérieur de ce conteneur supérieur (12), la boisson obtenue empruntant ce passage (18) vers le haut sous la pression et s'en échappant pour être recueillie dans ledit conteneur supérieur (12).

6. Dispositif suivant l'une quelconque des revendications 1 à 4, caractérisé en ce que le fond (16) du conteneur supérieur (12) comprend une vanne à une voie (24, 26, 28) par laquelle la boisson obtenue s'écoule vers le conteneur supérieur (12).

7. Dispositif selon l'une quelconque des revendications précédentes, caractérisé en ce que le conteneur inférieur (1) est fabriqué en métal fin.

8. Dispositif suivant l'une quelconque des revendications précédentes, caractérisé par le fait que le conteneur supérieur (12) sert de tasse.

9. Dispositif selon l'une quelconque des revendications précédentes, caractérisé en ce que le conteneur supérieur (12) et/ou l'élément intermédiaire (5) sont exécutés en résine synthétique utilisable pour les denrées alimentaires.

10. Dispositif suivant la revendication 1, caractérisé en ce que le fond (1C) du conteneur inférieur (1) est doté d'un prolongement ou saillie interne qui peut être actionné de l'extérieur pour déchirer la membrane (6).

# Fig.1

Fig.2

# Fig.3

# Fig.4